(19) Europäisches Patentamt
European Patent Office
Office européen des brevets

(11) Veröffentlichungsnummer: **0 448 822 A2**

# (12) EUROPÄISCHE PATENTANMELDUNG

(21) Anmeldenummer: **90124861.7**

(22) Anmeldetag: **20.12.90**

(51) Int. Cl.$^5$: **B32B 27/08**, B32B 27/18, B32B 31/12

(30) Priorität: **24.03.90 DE 4009557**

(43) Veröffentlichungstag der Anmeldung:
**02.10.91 Patentblatt 91/40**

(84) Benannte Vertragsstaaten:
**BE DE ES FR GB IT**

(71) Anmelder: **BAYER AG**

**W-5090 Leverkusen 1 Bayerwerk(DE)**

(72) Erfinder: **Wolf, Udo, Dr.**
**Uerdinger Strasse 469**
**W-4150 Krefeld 1(DE)**
Erfinder: **Weymans, Günther, Dr.**
**Körnerstrasse 5**
**W-5090 Leverkusen 1(DE)**

## (54) Polyarylensulfid-Verbundfolien.

(57) Die Erfindung betrifft Verbundfolien aus Polyarylensulfiden und ein Verfahren zu ihrer Herstellung. Die erfindungsgemäßen Verbundfolien zeichnen sich durch besonders gute Haftung aus und sind für elektronische Bauteile und zur Herstellung von Membranen geeignet.

EP 0 448 822 A2

Die Erfindung betrifft Verbundfolien aus Polyarylensulfiden und ein Verfahren zu ihrer Herstellung. Die erfindungsgemäßen Verbundfolien zeichnen sich durch besonders gute Haftung aus und sind für elektronische Bauteile und zur Herstellung von Membranen geeignet.

Aus der JP-A 62/142786 ist die Behandlung von PAS-Formmassen mit HF-Salzen oder HF-haltigen Säuren bekannt. Für manche Anwendungen, besonders als Membran und für Bewitterungsschutz stören die nach der Behandlung in den Formmassen verbleibenden Ionen.

Aus der EP-A 182 379 ist bekannt durch Laserbehandlung von PAS-Oberflächen und Ionenätzung eine verbesserte Metallhaftung erhalten, wenn man insbesondere als geeignete Füllstoffe die bekannten Additive $TiO_2$, $SiO_2$, $CaCO_3$ und/oder $CaSO_4$ verwendet. Das Verfahren ist sehr aufwendig.

Weiterhin ist nach der US-A 4 486 463 bekanntlich eine gute Haftung von Kupfer auf PAS-Formmassen zu erreichen, wenn man amorphe Oberflächen mit Schwefelsäure-Natriumdichromat-Lösungen behandelt. Die Entfernung der verbleibenden Restlösungsmittel auf den PAS-Oberflächen ist aufwendig.

Aus der EP-A 103 148 ist bekannt durch physikalische Alterung von PAS-Oberflächen eine verbesserte Metallhaftung zu erreichen. Nachteilig sind lange Zykluszeiten (mehr als 10 Tage) und die nicht immer befriedigende Haftung.

Aus der JP-A 57/187327 ist bekannt, PAS-Oberflächen (bevorzugt Folienoberflächen) durch Corona-Entladung oder Plasmabehandlung ihre Haftungseigenschaften gegenüber Metallen verbessern. Auch hier ist das Verfahren selbst recht aufwendig.

Verbundfolien von Polyarylensulfid-Formteilen oder -Folien mit anderen Thermoplasten sind im Prinzip bekannt. Sie haben jedoch in vielen Fällen keine ausreichende Haftung miteinander, was zur Delaminierung des Verbundes im Laufe der Zeit führt.

Es hat daher nicht an Versuchen gefehlt, diese Haftung zu verbessern. Man kann zwischen die beiden Folien (a) und (b) (oder bei mehrlagigen Folien an allen Stellen, die für die Polyarylensulfid-Folien-Haftung wichtig sind) Additive und Klebstoffe geben. Das Verfahren hat den Nachteil, daß das Eigenschaftsprofil der hoch wärmeformbeständigen Polyarylensulfid-Formteile durch die Wärmeformbeständigkeit der Klebstoffe im Gebrauchsbereich beschränkt wird. Weiterhin gibt es bei der Herstellung der Verbunde oft unerwünschte Ausgasungen und Folien-Verunreinigungen.

Gegenstand der Erfindung sind Verbundfolien aus

(a) Folien einer Dicke von 1 bis 1500 $\mu$m aus Polyarylensulfiden, die gegebenenfalls übliche Additive, Füllstoffe und Verstärkungsmittel enthalten und

(b) Folien einer Dicke von 2 bis 3000 $\mu$m aus anderen Thermoplasten.

Ein weiterer Gegenstand der Erfindung ist ein Verfahren zur Herstellung von Verbundfolien, dadurch gekennzeichnet, daß eine vorzugsweise amorphe Polyarylensulfid-Folie (a) hergestellt nach an sich bekanntem Verfahren mit einer Dicke von 1 bis 1500 $\mu$m an der Oberfläche mit aprotischen organischen Flüssigkeiten bei Temperaturen von 10°C bis der Schmelztemperatur des verwendeten Polyarylensulfids, bevorzugt von 10°C bis 80°C, insbesondere bei 20 bis 30°C behandelt wird und während und/oder nach dieser Behandlung die Folie mit einer zweiten Folie aus anderen Thermoplasten unter Anwendung von Drücken von 1 bis 500 bar gegebenenfalls unter Erwärmung auf Temperaturen von 10°C bis 10°C oberhalb ihrer Schmelztemperatur und/oder Glastemperatur zusammengebracht wird.

Zur Behandlung der Oberfläche der Polyarylensulfidfolie werden aprotische organische Flüssigkeiten eingesetzt wie N-Alkylactame wie N-Methylcaprolactam, N-Methylpyrrolidon, 2-Methyltetrahydrofuran.

Die Kontaktzeiten dieser Flüssigkeiten mit der vorzugsweise amorphen PAS-Oberfläche liegen bei weniger als 10 Minuten, bevorzugt unterhalb 1 Minute und insbesondere von 0,1 bis 30 sec.

Man erhält vorzugsweise amorphe PAS-Oberflächen mit besonders hoher Rauhigkeit.

Man bringt nach Trocknen oder Abwischen der Flüssigkeitsreste von den Oberflächen anschließend gegebenenfalls eine Maske nach bekannten Verfahren auf die PAS-Oberfläche, die diejenigen PAS-Bereiche, die nicht mit anderen Thermoplasten eine gute Haftung haben sollen, abdeckt.

Gegebenenfalls können auch mehr als eine Folie aus anderen Thermoplasten mit den Polyarylensulfid-Folien in Kontakt gebracht werden. Erfindungsgemäß kann die Polyarylensulfid-Folie (a) auf einer Seite oder auf beiden Seiten mit den aprotischen Flüssigkeiten behandelt werden, um dann auf einer Seite oder auf beiden Seiten andere Thermoplastfolien aufzubringen.

In einer besonderen Ausführungsform der Erfindung können Polyarylensulfid-haltige Formteile anstelle der Folie der Komponente (a) erfindungsgemäß mit Folien aus anderen Thermoplasten (b) überzogen (kachiert) werden.

Eine weitere Ausführungsform der Erfindung ist die Kaschierung von Formteilen aus anderen Thermoplasten (b) mit Folien (a).

Gegenstand der vorliegenden Erfindung ist somit auch ein Verfahren zur Kaschierung von Formteilen aus Polymeren (b) mit Polyarylensulfid-haltigen Folien (a) einer Dicke von 1 bis 1500 $\mu$m, dadurch

gekennzeichnet, daß eine Polyarylensulfid-Folien (a), hergestellt nach an sich bekanntem Verfahren mit einer Dicke von 1 bis 1500 µm an der Oberfläche mit aprotischen organischen Flüssigkeiten bei Temperaturen von 10°C bis der Schmelztemperatur des verwendeten Polyarylensulfids, bevorzugt von 10°C bis 80°C, insbesondere bei 20 bis 30°C behandelt wird und während und/oder nach dieser Behandlung die Folie mit dem Formteil aus Thermoplasten b) unter Anwendung von Drücken von 1 bis 500 bar gegebenenfalls unter Erwärmung auf Temperaturen von 10°C bis 100°C oberhalb ihrer Schmelztemperatur und/oder Glastemperatur zusammengebracht wird.

Ein weiterer Gegenstand der Erfindung sind die nach diesem Verfahren hergestellten kaschierten Formteile.

Gegenstand der vorliegenden Erfindung ist auch ein Verfahren zur Kaschierung von Formteilen aus Polyarylensulfiden (a) mit Folien aus anderen Thermoplasten (b) einer Dicke von 2 bis 3000 µm, dadurch gekennzeichnet, daß zunächst das Formteil (a) an der zu kaschierenden Oberfläche mit aprotischen organischen Flüssigkeiten bei Temperaturen von 10°C bis der Schmelztemperatur des verwendeten Polyarylensulfids, bevorzugt von 10°C bis 80°C, insbesondere bei 20 bis 30°C behandelt wird und während und/oder nach dieser Behandlung das Formteil mit der Folie aus Thermoplasten b) unter Anwendung von Drücken von 1 bis 500 bar gegebenenfalls unter Erwärmung auf Temperaturen von 10°C bis 100°C oberhalb ihrer Schmelztemperatur und/oder Glastemperatur zusammengebracht wird.

Ein weiterer Gegenstand der Erfindung sind die nach diesem Verfahren hergestellten kaschierten Formteile aus PAS.

Im ersten Verfahrensschritt werden die PAS-Formmassen in bekannter Weise auf bekannten Verarbeitungsmaschinen zu Folien verarbeitet. Dabei wird durch Abspritzen in relativ gering temperierte Werkzeuge oder durch Extrusion mit raschem Abkühlen an der Extrusionsaustrittsstelle eine im wesentlichen amorphe PAS-Außenschicht des Formteils (Folie) erzeugt. Es können auch PAS-Formmassen verwendet werden, die von sich aus nur sehr schlecht kristallisieren und daher in der Regel schon eine amorphe Formteil-Deckschicht besitzen. Solche PAS-Formmassen sind zum Beispiel verzweigt oder in ihrer Kristallisation durch Additive oder durch Störstellen gehindert.

Im allgemeinen haben die bevorzugt verwendeten PAS-haltigen Formmassen Glastemperaturen von mehr als 85°C und eine Wärmeformbeständigkeit, bestimmt nach Vicat B, von mehr als 230°C, insbesondere von mehr als 260°C. Bei teilkristalline PAS mit Glastemperaturen unterhalb 230°C kann durch Füllstoffe und durch Kristallisationsbildner eine bevorzugte Vicat B - Temperatur von über 230°C erzielt werden.

Erfindungsgemäß geeignete Polyarylensulfide (PAS), vorzugsweise Polyphenylensulfid (PPS), sind z.B. aus der EP-A 171 021, US-A 3 354 129 bekannt. Sie können Strukturelemente der Formeln (I)-(IV)

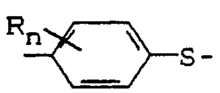

(I),

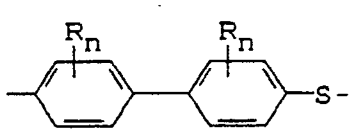

(II),

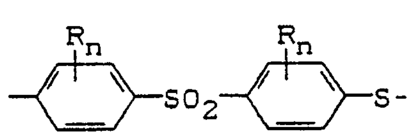

(III),

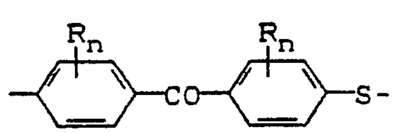

(IV),

in den

R für $C_1$-$C_4$-Alkyl, $C_6$-$C_{10}$-Aryl und
n für 0, 1, 2,
steht,
enthalten.

Die PAS können linear oder verzweigt sein. Sie können durch spezielle Endgruppen in ihren Eigenschaften variiert sein. Gemische beliebiger Zusammensetzung der unterschiedlichen PAS sind möglich.

Die PAS können bis zu 60 Gew.-% bekannte Additive, Füllstoffe und Verstärkungsmittel, zum Beispiel anorganische Füllstoffe wie Glasfasern enthalten.

Auch kleine Beimischungen anderer Polymerer, bevorzugt bis 5 Gew.-Teile auf 100 Gew.-Teile PAS -können den PAS-haltigen Formmassen zugegeben werden.

Bevorzugt wird Polyphenylensulfid (PPS) eingesetzt.

PAS-haltige Formmassen sind bekannt und z.B. unter den Handelsnamen FORTRON®, SUPEC®, RYTON®, TEDUR® handelsüblich.

Ein wesentlicher Vorteil der Erfindung ist ihre einfache Durchführung, ohne die Zyklenzeit bei der Verbundherstellung zu erhöhen. Besondere technische Apparaturen sind nicht erforderlich - die Oberflächenbehandlung kann z-B. durch Besprühen oder Eintauchen in die Flüssigkeit erfolgen.

Andere Thermoplaste (b) im Sinne der Erfindung sind bekannte amorphe oder teilkristalline Polymere mit Molekulargewichten $M_w$ von 10.000 bis 300.000 g/mol. Bevorzugt sind Polymere, die eine Glastemperatur von mehr als 80 °C haben, oder die als teilkristalline Polymere eine Schmelztemperatur von mehr als 100 °C haben, bevorzugt von mehr als 120 °C und weniger als 400 °C.

Solche Polymere sind bekannt und handelsüblich. Zum Beispiel Polycarbonate, Polyamide, Polyolefine, Polysulfone, Polyketone, thermoplastische Vinylpolymerisate wie Polymethylacrylsäureester oder Homopolymeriste von Vinylaromaten, Copolymerisate von Vinylaromaten oder Pfropfpolymerisate von Vinylmonomeren auf Kautschuke, Polyether, Polyimide, thermoplastische Polyurethane, aromatische Polyester(carbonate) und flüssigkristalline Polymere, aliphatische Polyester.

Die erfindungsgemäßen Folien können bei der Herstellung von elektrischen Strom führenden Bauteilen wie Leiterplatten, Chips usw. verwendet werden.

Beispiele

I) Polyarylensulfid-Formmassen:

Verwendet wurden folgende PAS-haltigen Formmassen:

a) PAS, hergestellt nach US-A 3 354 129 mit Verzweigerzusatz;
b) PAS nach EP-A 142 024, Beispiel 2;
c) PAS nach US-A 4 286 018, Beispiel 10;
d) PAS nach US-A 3 354 129.

II) andere Thermoplaste:

a) Bisphenol-A-Polycarbonat mit einer relativen Viskosität - gemessen in Methylenchlorid bei 25 °C und einer Konzentration von 0,5 g/dl Polymer - von 1.28;
b) Polymethylmethacrylat V 811 - Rohm & Haas;
c) Polycaprolactam mit einer relativen Lösungsviskosität von 3,0 - gemessen als 0,5 gew.-%ige Lösung in m-Kresol;
d) Polyethylenterephthalat mit einer intrinsic-Viskosität von 0,72, gemessen in Phenol/o-Dichlorbenzol Gewichtsverhältnis 1:1 bei 25 °C;
e) Polybutylenterephthalat mit einer Intrinsic-Viskosität von 1.21, gemessen in Phenol/o-Dichlorbenzol (Gewichtsverhältnis 1:1) bei 25 °C;
f) Poly(2,6-dimethyl-1,4-phenylen)-ether mit einer relativen Viskosität von 1.62, gemessen in Chloroform bei 25 °C, 0,5 gew.-%ige Lösung;
g) Aromatisches Polyestercarbonat auf Basis von Bisphenol A mit einem Esteranteil von 80 Gew.-% (Isophthalsäure:Terephthalsäure = 1:1) mit einer relativen Viskosität von 1.3 (0,5 Gew.-% Lösung in Methylenchlorid);
h) Polyethersulfon auf Basis Bisphenol A, hergestellt durch Umsetzung von Dichlordiphenylsulfon und Bisphenol A in Diphenylsulfon nach bekannten Verfahren, mit einer rel. Viskosität von 1.249 (0,5 Gew.-%ige Lösung in Methylenchlorid);
i) Polyetherketon auf Basis Bisphenol-A, hergestellt durch Umsetzung von Difluorbenzophenon und Bisphenol A nach bekannten Verfahren z.B. EP-A 1879), mit einer relativen Viskosität von 1.455 (0,5 Gew.-%ige Lösung in Methylenchlorid).

III) Herstellung der Folien aus den Substanzen I) und II)

Die Herstellung der Folien aus den Substanzen erfolgte nach bekanntem Verfahren. Dazu wurden die Folien in an sich bekannter Weise in der Schmelze aus einem Düsenschlitz extrudiert, wobei auf biaxiale Verstreckung verzichtet wurde. Der Düsenschlitz wurde so eingestellt, daß die Folien jeweils eine Dicke von etwa 100 $\mu$m hatten.

IV) Nicht erfindungsgemäße Beispiele:

1. Beispiel

Folie Ia) wurde für 2 Minuten auf 180 °C, Folie IIa) für 2 Minuten auf 140 °C erwärmt, anschließend wurde beide Folien 3 Minuten lang bei Temperaturen von etwa 160 °C unter Anwendung eines Drucks von 200 bar verpreßt.

Die Folien hafteten nicht sehr gut aufeinander. Sie konnten im einfachen Handversuch auseinandergezogen werden.

2. Beispiel

Wie in Beispiel 1, jedoch nach Abwaschen der Folie Ia) mit

(i) Wasser,
(ii) Methylenchlorid,
(iii) Aceton,

bei einer Kontaktzeit von etwa 30 sec und anschließendem Abwischen der Flüssigkeitsreste wurde eine Verbundfolie hergestellt.

Auch sie zeigte keine guten Haftungseigenschaften.

V) Erfindungsgemäße Beispiele

3.-5. Beispiel: (Vergleich zu Beispiel 1)

Wie in dem nicht erfindungsgemäßen Beispiel, jedoch unter zusätzlicher Verwendung des erfindungsgemäßen Verfahrens wurden die Folien Ia) und IIa) zusammengebracht. Zunächst wurde die Folie Ia) jeweils mit einer der Substanzen

(i) NMC
(ii) NMP
(iii) 2-Methyltetrahydrofuran

45 Sekunden bei 25 °C in Kontakt gebracht, anschließend wurden die Oberflächen bei Raumtemperatur an Luft getrocknet, nachdem sie zuvor mit einem Trockentuch abgewischt worden sind und dann die Verbundfolie nach Beispiel 1 hergestellt.

Die Verbundfolie haftete ausgezeichnet.

Beispiele 6-13

Entsprechend Beispiel 3, jedoch bei Preßtemperaturen, die jeweils 30 °C oberhalb der Glastemperatzur des verwendeten Materials II) b)-i) lagen, wurden Verbundfolien hergestellt nach Vorbehandlung mit NMC, NMP und 2-Methyl-Tetrahydrofuran (THF) gemäß Tabelle I:

| Nr. | 1.Folie | 2.Folie | NMC | NMP | THF | Kontakt-zeit | Haftung |
|---|---|---|---|---|---|---|---|
| 6 | Ia | IIb | x | | | 45 sec | gut |
| 7 | Ib | IIc | x | | | 30 sec | gut |
| 8 | Ic | IId | x | | | 30 sec | gut |
| 9 | Id | IIe | | x | | 39 sec | gut |
| 10 | Ia | IIf | | x | | 10 sec | gut |
| 11 | Ib | IIg | | x | | 60 sec | gut |
| 12 | Ic | IIh | | | x | 120 sec | gut |
| 13 | Id | IIi | | | x | 120 sec | gut |

In allen Fällen war die Haftung gut.

**Patentansprüche**

1. Verbundfolien aus
(a) Folien einer Dicke von 1 bis 1500 μm aus Polyarylensulfiden, die gegebenenfalls übliche Additive, Füllstoffe und Verstärkungsmittel enthalten und
(b) Folien einer Dicke von 2 bis 3000 μm aus anderen Thermoplasten.

2. Verfahren zur Herstellung von Verbundfolien, dadurch gekennzeichnet, daß eine Polyarylensulfid-Folie (a) hergestellt nach an sich bekanntem Verfahren mit einer Dicke von 1 bis 1500 μm an der Oberfläche mit aprotischen organischen Flüssigkeiten bei Temperaturen von 10 °C bis der Schmelztemperatur des verwendeten Polyarylensulfids behandelt wird und während und/oder nach dieser Behandlung die Folie mit einer zweiten Folie aus anderen Thermoplasten unter Anwendung von Drücken von 1 bis 500 bar gegebenenfalls unter Erwärmung auf Temperaturen von 10 °C bis 10 °C oberhalb ihrer Schmelztemperatur und/oder Glastemperatur zusammengebracht wird.

3. Verwendung von Folien des Anspruchs 1 zur Herstellung von elektrischen Strom führenden Bauteilen.

4. Verfahren zur Kaschierung von Formteilen aus Polymeren (b) mit Polyarylensulfid-haltigen Folien (a) gemäß Anspruch 1, einer Dicke von 1 bis 1500 μm, dadurch gekennzeichnet, daß eine Polyarylensulfid-Folie (a) hergestellt nach an sich bekanntem Verfahren mit einer Dicke von 1 bis 1500 μm an der Oberfläche mit aprotischen organischen Flüssigkeiten bei Temperaturen von 10 °C bis der Schmelztemperatur des verwendeten Polyarylensulfids behandelt wird und während und/oder nach dieser Behandlung die Folie mit dem Formteil aus Thermoplasten b) unter Anwendung von Drücken von 1 bis 500 bar gegebenenfalls unter Erwärmung auf Temperaturen von 10 °C bis 100 °C oberhalb ihrer Schmelztemperatur und/oder Glastemperatur zusammengebracht wird

5. Formteile, erhältlich nach Anspruch 4.

6. Verfahren zur Kaschierung von Formteilen aus Polyarylensulfiden (a) mit Folien aus anderen Thermoplasten (b) gemäß Anspruch 1, einer Dicke von 2 bis 3000 μm, dadurch gekennzeichnet, daß zunächst das Formteil (a) an der zu kaschierenden Oberfläche mit aprotischen organischen Flüssigkeiten bei Temperaturen von 10 °C bis der Schmelztemperatur des verwendeten Polyarylensulfids behandelt wird und während und/oder nach dieser Behandlung das Formteil mit der Folie aus Thermoplasten b) unter Anwendung von Drücken von 1 bis 500 bar gegebenenfalls unter Erwärmung auf Temperaturen von 10 °C bis 100 °C oberhalb ihrer Schmelztemperatur und/oder Glastemperatur zusammengebracht wird.

7. Formteile erhältlich nach Anspruch 6.